# EUROPEAN PATENT APPLICATION

(11) **EP 4 503 809 A1**
(43) Date of publication of application: **05.02.2025**
(21) Application number: 23779229.6
(22) Date of filing: 03.03.2023
(51) Int. Cl.: H04W 72/0446, H04W 72/1268, H04W 84/12

(54) **COMMUNICATION DEVICE, COMMUNICATION METHOD, AND PROGRAM**

(30) Priority: 28.03.2022 JP 2022052636
(71) Applicant: CANON KABUSHIKI KAISHA, Tokyo 146-8501 (JP)
(72) Inventor: INOHIZA, Hirohiko, Tokyo 146-8501 (JP)
(74) Representative: Canon Europe Limited
(86) International application number: PCT/JP2023/007954
(87) International publication number: WO 2023/189200

(57) **Abstract**

A communication apparatus that joins a wireless network formed by a first other communication apparatus receives, while being in an Awake state, a Trigger frame conforming to an IEEE 802.11 series standard from the other communication apparatus, the Trigger frame permitting to share a first period with at least one communication apparatus joining the wireless network and communicate, the first period being at least one portion of a TXOP (transmission opportunity) acquired by the first other communication apparatus. In a case where the communication apparatus is not permitted to share the first period by the received Trigger frame, the communication apparatus maintains the Awake state during the first period.

## Description

### Technical Field

The present invention relates to wireless communication technologies.

### Background Art

The IEEE standards committee has developed IEEE 802.11 standards for wireless LAN (local area network) technologies. The standards for wireless LAN technologies include IEEE 802.11/a/b/g/n/ac/ax standards. The term "IEEE" is an abbreviation for "Institute of Electrical and Electronics Engineers".

As described in PTL 1, IEEE 802.11ax uses OFDMA to achieve high peak throughput of up to 9.6 gigabits per second (Gbps) and improved communication speed in a congestion situation. The term "OFDMA" is an abbreviation for "orthogonal frequency-division multiple access".

For further improved throughput, a task group has been launched to develop IEEE 802.11be as a successor standard to IEEE 802.11ax.

A task group called IEEE 802.11be has been launched as a successor standard aimed at further improving throughput, frequency utilization efficiency, and communication latency. In the IEEE 802.11be standard, for example, multi-link communication in which an AP (access point) establishes multiple links with an STA (station) over different frequency channels for concurrent communications is under consideration.

In IEEE 802.11be, Triggered TXOP sharing has been developed to share, using a Trigger frame, a portion of a TXOP acquired by an AP between the AP and an STA joining a network. The term "TXOP" is an abbreviation for "transmission opportunity". The AP shares a TXOP acquired by the AP with an STA designated by the AP. During the shared TXOP, an STA that is not designated is inhibited from transmitting a frame. This avoids unnecessary collision of transmitted frames, thus enabling efficient communication.

### Citation List

### Patent Literature

PTL 1: Japanese Patent Laid-Open No. 2018-50133

### Summary of Invention

### Technical Problem

According to the above-described method under consideration, a TXOP acquired by an AP is shared between the AP and a designated STA to achieve improved communication efficiency. However, there is no rule for behavior of an STA for which TXOP is not shared. Such an STA may fail to appropriately exchange frames with an AP and an STA that share a TXOP.

The present invention aims to allow communication apparatuses, or an AP and STAs, to appropriately exchange frames with each other during communication in which the AP shares a TXOP acquired by the AP with a designated STA. Solution to Problem

In response to the above issue, the present invention provides a communication apparatus that joins a wireless network formed by a first other communication apparatus, the communication apparatus including: first receiving means for receiving, while the communication apparatus is in an Awake state, a Trigger frame conforming to an IEEE 802.11 series standard from the other communication apparatus, the Trigger frame permitting to share a first period with at least one communication apparatus joining the wireless network and communicate, the first period being at least one portion of a TXOP (transmission opportunity) acquired by the first other communication apparatus; and control means for, in a case where the communication apparatus is not permitted to share the first period by the Trigger frame received by the first receiving means, causing the communication apparatus to maintain the Awake state during the first period.

The present invention further provides a communication apparatus that operates to form a wireless network, the communication apparatus transmitting a Trigger frame conforming to an IEEE 802.11 series standard to another communication apparatus joining a wireless network formed by the communication apparatus, the Trigger frame permitting to share a first period with at least one communication apparatus joining the wireless network and communicate, the first period being at least one portion of a TXOP (transmission opportunity) acquired by the communication apparatus. The Trigger frame includes information indicating whether to cause a communication apparatus that is not permitted to share the first period by the Trigger frame to maintain an Awake state during the first period. Advantageous Effects of Invention

According to the present invention, an AP and STAs can appropriately exchange frames with each other during communication in which the AP shares a TXOP acquired by the AP with a designated STA.

### Brief Description of Drawings

[Fig. 1] Fig. 1 is a diagram illustrating an example configuration of a network formed by a communication apparatus 101.
[Fig. 2] Fig. 2 is a diagram illustrating a hardware configuration of communication apparatuses 101 to 104.
[Fig. 3] Fig. 3 is a diagram illustrating an example functional configuration of the communication apparatuses 102 to 104.
[Fig. 4] Fig. 4 is a sequence diagram illustrating example communication through Triggered TXOP sharing in a first embodiment.
[Fig. 5] Fig. 5 is a flowchart explaining an operation of an STA in the first embodiment.
[Fig. 6] Fig. 6 is a diagram illustrating a frame format of a Trigger frame in a second embodiment.
[Fig. 7] Fig. 7 is a flowchart explaining an operation of an AP in the second embodiment.
[Fig. 8] Fig. 8 is a flowchart explaining an operation of an STA in the second embodiment.

### Description of Embodiments

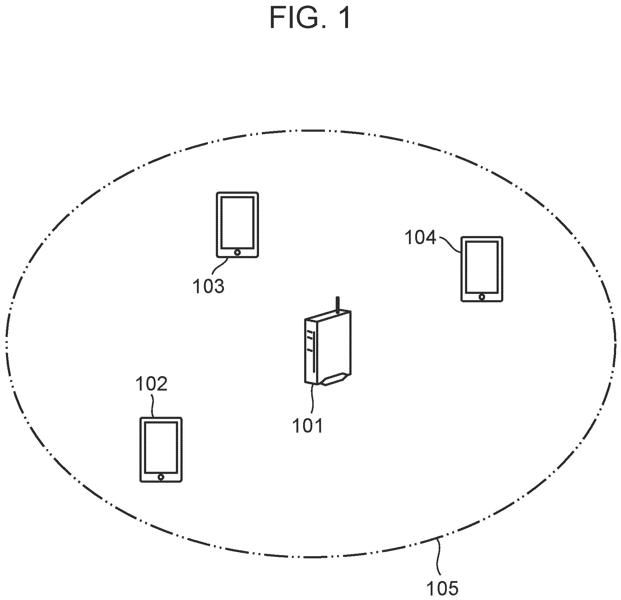

Fig. 1 is a diagram illustrating an example configuration of a wireless network according to an embodiment. A communication apparatus 101 is capable of communicating with communication apparatuses 102, 103, and 104. The communication apparatus 101 is an access point (AP) that has a role in forming a wireless network 105. Each of the communication apparatuses 102, 103, and 104 is a station (STA) that has a role in joining the wireless network 105.

Each of the communication apparatuses 101 to 104 is capable of executing wireless communication conforming to the IEEE 802.11be standard. The term "IEEE" is an abbreviation for "Institute of Electrical and Electronics Engineers". The communication apparatuses 101 to 104 are capable of communicating in a 2.4 GHz frequency band, in a 5 GHz frequency band, and in a 6 GHz frequency band. Furthermore, the communication apparatuses 101 to 104 are capable of communicating using bandwidths of 20 MHz, 40 MHz, 80 MHz, 160 MHz, and 320 MHz.

The communication apparatuses 101 to 104 are capable of achieving multi-user (MU) communication, in which signals of multiple users are multiplexed, by executing OFDMA communication conforming to the IEEE 802.11be standard. The term "OFDMA" is an abbreviation for "orthogonal frequency-division multiple access". In the OFDMA communication, parts (resource units or RUs) of divided frequency bands are assigned to individual STAs such that the RUs do not overlap each other, and sub-carriers of the STAs are orthogonal to each other. This allows the AP to concurrently communicate with the STAs.

The communication apparatuses 101 to 104 are compatible with the IEEE 802.11be standard. In addition to this standard, the communication apparatuses 101 to 104 may be compatible with a legacy standard that is a standard previous to the IEEE 802.11be standard. Specifically, the communication apparatuses 101 to 104 may be compatible with at least one of the IEEE 802.11a/b/g/n/ac/ax standards or may be compatible with a successor standard to the IEEE 802.11be standard.

In addition to the IEEE 802.11 series standards, the communication apparatuses 101 to 104 may be compatible with other communication standards, such as Bluetooth (registered trademark), NFC, UWB, ZigBee, and MBOA.

The term "UWB" is an abbreviation for "ultra-wide band". The term "MBOA" is an abbreviation for "Multi-Band OFDM Alliance". The term "NFC" is an abbreviation for "near-field communication". The UWB includes wireless USB, wireless 1394, and WiNET. The communication apparatuses 101 to 104 may also be compatible with a communication standard for wired communication over, for example, a wired LAN.

Specific examples of the communication apparatuses 101 to 104 include, but are not limited to, a wireless LAN router and a personal computer (PC). Each of the communication apparatuses 101 to 104 may be an information processing apparatus, such as a wireless chip, capable of executing wireless communication conforming to the IEEE 802.11be standard. Specific examples of the communication apparatuses 102 to 104 include, but are not limited to, a camera, a tablet, a smartphone, a PC, a mobile phone, and a video camera. Although the wireless network of Fig. 1 includes one AP and three STAs, the number of APs and the number of STAs are not limited to those in Fig. 1.

Triggered TXOP sharing is a technique for allowing the communication apparatus 101, serving as an AP, to allocate a portion of a TXOP acquired by the communication apparatus 101 to any of the communication apparatuses 102 to 104 and share the TXOP with the communication apparatus. In Triggered TXOP sharing, a Trigger frame is used to permit a communication apparatus joining a network formed by an AP to share at least one portion of a TXOP acquired by the AP, thus enabling efficient communication. A TXOP (transmission opportunity) refers to a period during which an AP or an STA is allowed to exclusively use a channel after acquiring a right to access the channel under EDCA-based contention control. The term "EDCA" is an abbreviation for "enhanced distributed channel access". Triggered TXOP sharing is a technique for permitting, using a Trigger Frame, an STA to share a portion of a TXOP acquired by an AP for efficient communication. Triggered TXOP sharing allows an AP to allocate a portion of a TXOP acquired by the AP to an STA and share the acquired TXOP with the STA. A period during which the AP can share the acquired TXOP with the STA and use the TXOP will be referred to as a TXOP sharing period.

Triggered TXOP sharing starts in response to an MU-RTS TXS Trigger frame transmitted from an AP to an STA. The term "MU-RTS TXS Trigger frame" is an abbreviation for "multi-user request-to-send TXOP sharing Trigger frame". At this time, the AP causes a User Info field of the MU-RTS TXS Trigger frame to include an AID of the STA to which a portion of the acquired TXOP is allocated and that is permitted to execute communication. The STA to which a portion of the TXOP is allocated can transmit data to the AP or another STA during the TXOP sharing period. Whether to execute communication between the STA and the AP or between the STAs during the TXOP sharing period can be designated in a TXOP sharing mode subfield included in a Common Info field of the above-described Trigger frame.

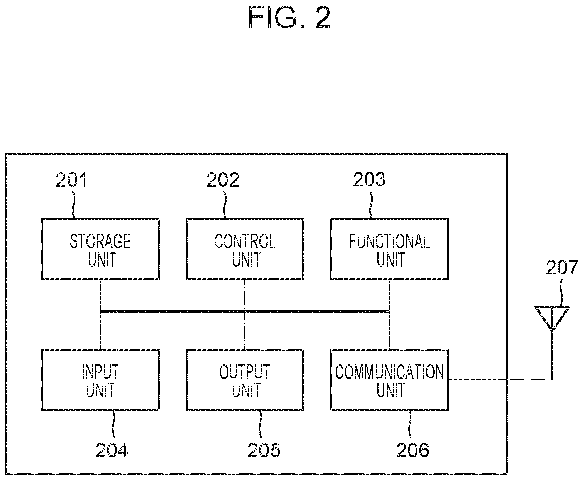

Fig. 2 illustrates an example hardware configuration of the communication apparatus 101, serving as an AP, in the embodiment. The communication apparatuses 102 to 104, serving as STAs, can have the same configuration. The communication apparatus 101 includes a storage unit 201, a control unit 202, a functional unit 203, an input unit 204, an output unit 205, a communication unit 206, and an antenna 207.

The storage unit 201 includes a memory such as a ROM or a RAM and stores a computer program for various operations, which will be described later, and various pieces of information, such as communication parameters for wireless communication. The term "ROM" is an abbreviation for "read-only memory". The term "RAM" is an abbreviation for "random access memory". For the storage unit 201, in addition to a memory such as a ROM or a RAM, a storage medium such as a flexible disk, a hard disk, an optical disk, a magneto-optical disk, a CD-ROM, a CD-R, a magnetic tape, a nonvolatile memory card, or a DVD may be used. The storage unit 201 may include multiple memories.

The control unit 202 includes one or more processors such as a CPU and an MPU and runs the computer program stored in the storage unit 201 to control the entire communication apparatus 104. The term "CPU" is an abbreviation for "central processing unit". The term "MPU" is an abbreviation for "micro processing unit". The control unit 202 may control the entire communication apparatus 101 based on cooperation between the computer program stored in the storage unit 201 and an OS (operating system). The control unit 202 generates data and signals to be transmitted for communication with other communication apparatuses. The control unit 202 may include multiple processors such as a multi-core processor and control the entire communication apparatus 101 through the multiple processors. The control unit 202 controls the functional unit 203 to execute a predetermined process, such as wireless communication, image capture, printing, or projection. The functional unit 203 is hardware that allows the communication apparatus 101 to execute a predetermined process.

The input unit 204 accepts various operations from a user. The output unit 205 provides various outputs to the user via a monitor screen and/or a speaker. Outputs provided by the output unit 205 may include display on the monitor screen, audio output through the speaker, and vibration output. Both the input unit 204 and the output unit 205 may be implemented by a single module, such as a touch panel. The input unit 204 and the output unit 205 may be incorporated in the communication apparatus 101 or may be separate from the communication apparatus 101.

The communication unit 206 controls wireless communication conforming to the IEEE 802.11be standard. In addition to the IEEE 802.11be standard, the communication unit 206 may control wireless communication conforming to another IEEE 802.11 series standard and wired communication over, for example, a wired LAN. The communication unit 206 controls the antenna 207 to receive and transmit radio signals, generated by the control unit 202, for wireless communication.

If the communication apparatus 101 is compatible with the NFC, Bluetooth, and other standards in addition to the IEEE 802.11be standard, the communication unit 206 may control wireless communications conforming to these communication standards. If the communication apparatus 101 can execute wireless communications conforming to multiple communication standards, the communication apparatus 101 may separately include communication units 206 and antennas 207 for the respective communication standards. The communication apparatus 101 communicates data including image data, text data, and video data to the communication apparatuses 102 to 104 via the communication unit 206.

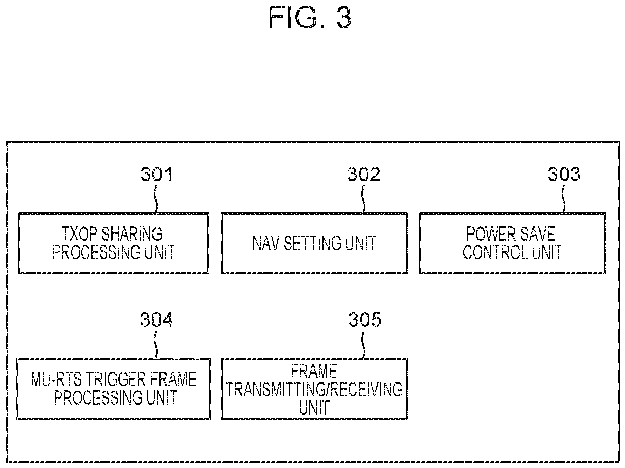

Fig. 3 illustrates a block diagram of a functional configuration of each of the communication apparatuses 102 to 104, serving as STAs, in the embodiment.

A TXOP sharing processing unit 301 performs control for Triggered TXOP sharing designated by the AP. In a case where a TXOP is allocated to the apparatus, the apparatus transmits data to a destination, or the AP or an STA, during a TXOP sharing period. In a case where the TXOP is not allocated to the apparatus, the apparatus enters an Awake state and is ready to receive data from the AP during the TXOP sharing period. An NAV setting unit sets an NAV indicating a transmission inhibition period for the apparatus based on duration information included in an MU-RTS TXS Trigger frame received from the AP or a CTS frame received from another STA. The term "NAV" is an abbreviation for "network allocation vector". Although the NAV is a period during which transmission is inhibited, a frame transmitted by another communication apparatus can be received during this period.

A Power save control unit 303 controls whether to enter a Power save mode in which a frame is intermittently received for power saving or maintain the Awake state in which the Power save mode is canceled. In the embodiment, in a case where a predetermined condition is satisfied, the Awake state is maintained during the TXOP sharing period.

An MU-RTS TXS Trigger frame processing unit 304 analyses and processes an MU-RTS TXS Trigger frame received from the associated AP. The STA executes a TXOP sharing process, NAV setting, and Power save control based on details of the MU-RTS TXS Trigger frame.

A frame transmitting/receiving unit 305 transmits and receives control frames including an MU-RTS TXS Trigger frame, management frames, and data frames.

### <First Embodiment>

A first embodiment describes an example in which, in a case where an STA that has received a Trigger frame indicating execution of TXOP sharing communication is not permitted to execute communication during a TXOP sharing period, the STA maintains the Awake state during this period.

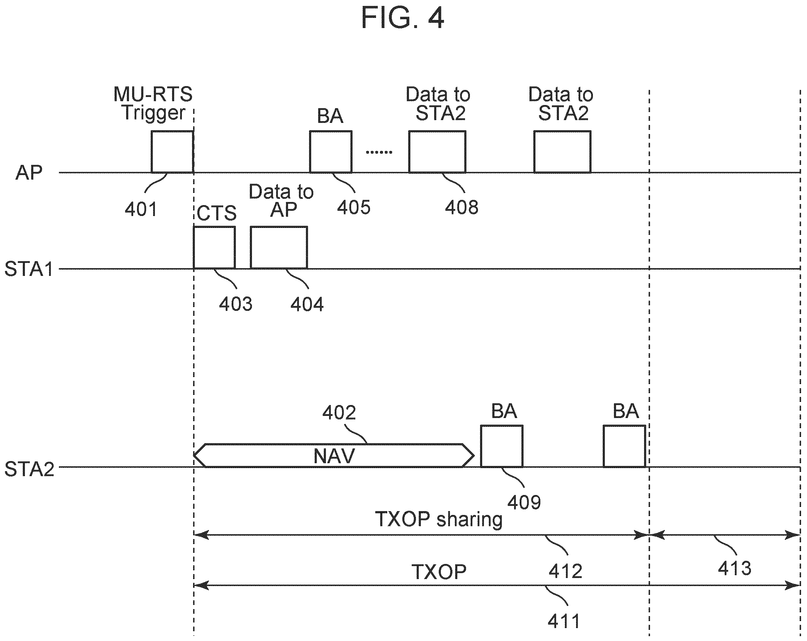

Fig. 4 is a sequence diagram illustrating example communication through Triggered TXOP sharing. In the first embodiment, a TXOP 411 acquired by an AP is allocated to an STA 1, and the STA 1 communicates with the AP during a TXOP sharing period 412.

The AP transmits an MU-RTS TXS Trigger frame at 401 to all STAs joining a wireless network. In the example of Fig. 4, the AP transmits the MU-RTS TXS Trigger frame to the STA 1 and an STA 2, and allocates the period 412, which is a portion of the acquired TXOP 411, to the STA 1.

The STA 1, to which the TXOP is allocated, transmits a CTS frame 403 as a response and then transmits a data frame 404 to the AP. The AP transmits a BA (block ACK) 405, serving as an acknowledgement, to the STA 1 in response to the data frame and then continues the exchange of a data frame and a BA during the TXOP sharing period 412 as needed.

The STA 2, to which the TXOP is not allocated, sets an NAV 402 for the TXOP sharing period. The NAV 402 indicates a transmission inhibition period for the STA 2. The NAV 402 is set based on Duration information included in the MU-RTS TXS Trigger frame 401 or the CTS frame 403. In this embodiment, if the NAV 402 is set, the STA 2 maintains the Awake state without changing to a Doze state.

The AP then detects that no data has been received from the STA 1 for a predetermined period and determines that the STA 1 has completed transmission with the TXOP sharing period 412. The AP then transmits a data frame 408 to the STA 2 during the TXOP sharing period. Since the STA 2 maintains the Awake state during the period corresponding to the set NAV 402, the STA 2 can receive the data frame 408. The STA 2 cancels the NAV 402 and transmits a BA 409 as a response.

Since the STA 2 maintains the Awake state during the TXOP sharing period allocated to the STA 1 as described above, the STA 2 can receive a data frame. This allows efficient use of the TXOP acquired by the AP.

The STA 2 maintains the Awake state during a remaining TXOP period 413 following the TXOP sharing period because the STA 2 can receive a frame from the AP.

As described above, the STA 2, to which the TXOP is not allocated, maintains the Awake state during the TXOP sharing period shared by the AP and the STA 1. Thus, the STA 2 can receive data transmitted from the AP during this period.

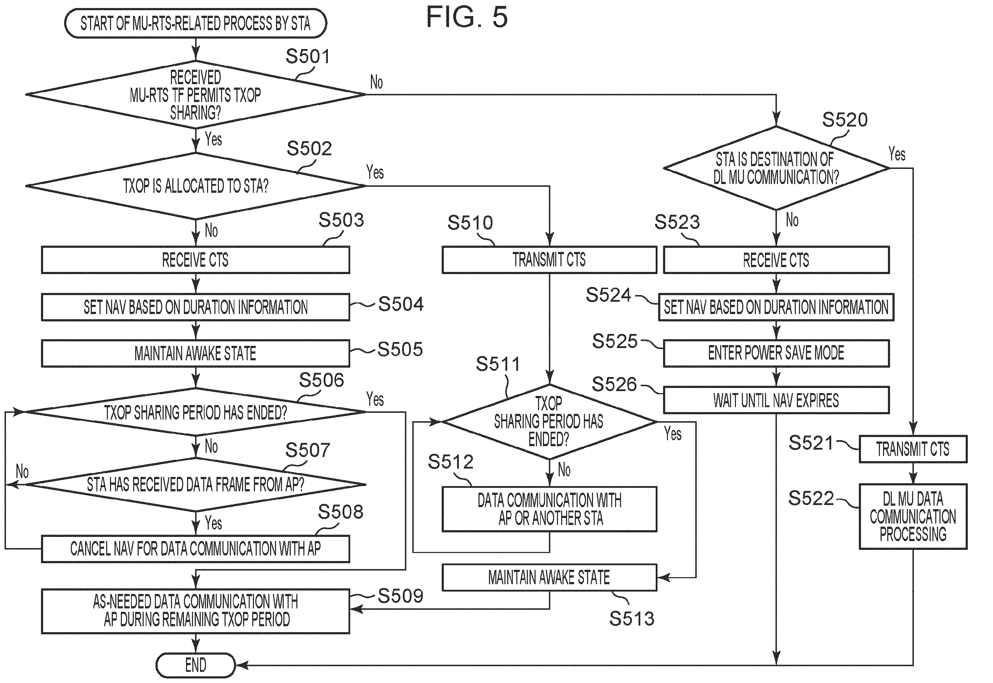

A TXOP sharing process implemented by executing the program stored in the storage unit 201 of the communication apparatus 102, the communication apparatus 103, or the communication apparatus 104, serving as an STA, through the control unit 202 will now be described with reference to Fig. 5. The process of the flowchart starts in response to the STA receiving an MU-RTS TXS Trigger frame.

The STA determines whether the MU-RTS TXS Trigger frame received from the AP permits execution of TXOP sharing communication (S501). In response to determining in S501 that the frame permits the execution of TXOP sharing communication, the STA proceeds to S502. Otherwise, the STA proceeds to S520.

TXOP sharing communication can be designated in a TXOP sharing mode subfield included in a Common Info field of the MU-RTS TXS Trigger frame. The STA that has received the MU-RTS TXS Trigger frame makes a determination in S501 based on information in the subfield.

In response to determining in S501 that the frame permits the execution of TXOP sharing, the STA determines whether at least one portion of a TXOP acquired by the AP is allocated to the STA (S502). In other words, the STA determines whether the STA is permitted to share the TXOP acquired by the AP and execute communication. In response to determining in S502 that the TXOP acquired by the AP is allocated to the STA, the STA proceeds to S510. Otherwise, the STA proceed to S503.

In S502, in a case where an AID of the STA is included in a User Info field of the MU-RTS TXS Trigger frame, the STA determines that the STA is permitted to share the TXOP acquired by the AP and communicate.

After determining in S502 that at least one portion of the TXOP acquired by the AP is not allocated to the STA, or if the STA is not permitted to execute communication during the TXOP acquired by the AP, the STA receives a CTS frame from another STA to which the TXOP is allocated (S503).

In response to receiving the CTS frame in S503, the STA sets an NAV based on duration information included in the MU-RTS TXS Trigger frame or the CTS frame (S504). In the embodiment, the STA maintains the Awake state during a period corresponding to the NAV set in S504 (S505). The STA determines whether the TXOP sharing period has ended (S506).

In response to determining in S506 that the TXOP sharing period has ended, the STA proceeds to S509. Otherwise, the STA proceeds to S507.

In response to determining that the TXOP sharing period has not ended, the STA determines whether the STA has received a data frame from the AP during the TXOP sharing period (S507). In response to determining in S507 that the STA has received no data frame from the AP, the STA returns to S506. In response to determining that the STA has received a data frame from the AP, the STA cancels the NAV and executes data communication with the AP (S508).

After determining that the TXOP sharing period has ended, the STA executes data communication with the AP (S509) in response to receiving data from the AP during the remaining TXOP period. Upon completion of the communication with the AP, the STA terminates the process of the flowchart.

In response to determining in S502 that the TXOP is allocated to the STA, the STA transmits a CTS frame, serving as a response to the MU-RTS TXS Trigger frame, to the AP (S510).

After transmitting the CTS frame in S510, the STA determines whether the TXOP sharing period, which is the TXOP allocated to the STA by the AP, has ended (S511). In response to determining in S511 that the TXOP sharing period has ended, the STA proceeds to S513. Otherwise, the STA proceeds to S512. In S512, the STA executes data communication with the AP or another STA during the TXOP allocated by the AP.

In response to determining in S511 that the TXOP sharing period has ended, the STA maintains the Awake state in S513. In response to receiving data from the AP during the remaining TXOP period, the STA executes data communication with the AP (S509). The STA then terminates the process of the flowchart.

In response to determining in S501 that the MU-RTS TXS Trigger frame received from the AP does not permit TXOP sharing, the STA determines whether the STA is a destination of DL MU communication (S520). The term "DL MU" is an abbreviation for "down-link multi-user". In response to determining in S520 that the STA is a destination, the STA proceeds to S521. Otherwise, the STA proceeds to S523.

In response to determining in S520 that the STA is a destination of DL MU communication, the STA transmits a CTS frame as a response to the MU-RTS TXS Trigger frame (S521) and executes DL MU data communication with the AP (S522). After determining in S520 that the STA is not a destination of DL MU communication, the STA receives a CTS frame from an STA that is a destination of DL MU communication (S523).

The STA then sets an NAV based on duration information included in the MU-RTS TXS Trigger frame received in S501 or the CTS frame received in S523 (S524). The STA enters the Power save mode for a period corresponding to the NAV set in S524 (S525). The STA waits until the NAV expires (S526) and then terminates the process of the flowchart.

According to the embodiment, an STA that is not permitted to communicate during a TXOP sharing period maintains the Awake state during this period and thus can receive a frame transmitted from the AP during the period.

### <Second Embodiment>

The first embodiment has described the example in which, in a case where an STA that has received a Trigger frame indicating TXOP sharing is not permitted to execute communication during a TXOP sharing period, the STA maintains the Awake state during this period.

A second embodiment describes an example in which, in a case where a Trigger frame indicates that an STA that is not permitted to communicate during a TXOP sharing period maintains the Awake state during this period, the STA maintains the Awake state during the period.

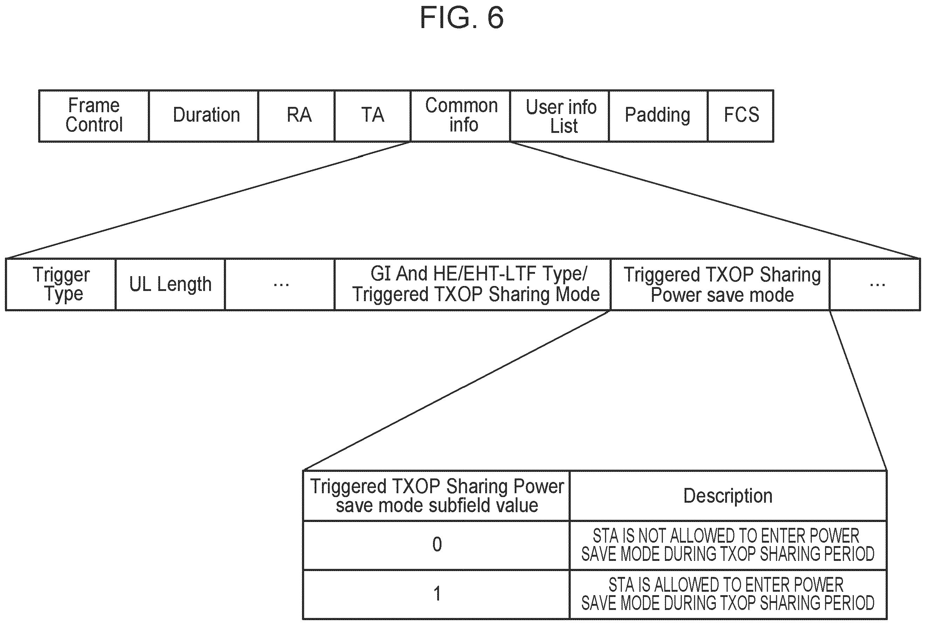

Fig. 6 illustrates an example frame format of an extended Trigger frame in the present embodiment.

The extended Trigger frame includes Frame Control, Duration, RA, TA, Common Info, User Info List, Padding, and FCS fields.

The Common Info field includes Trigger Type, UL length, GI And HE/EHT-LTF Type/Triggered TXOP Sharing Mode, Triggered TXOP Sharing Power save mode subfields.

The Trigger Type field indicates the type of a Trigger frame. To execute TXOP sharing, this field designates a MU-RTS TXS Trigger frame.

The GI And HE/EHT-LTF Type/Triggered TXOP Sharing Mode field includes information indicating whether to execute TXOP sharing communication.

The Triggered TXOP Sharing Power save mode field designates whether a communication apparatus that is not permitted to execute communication during a TXOP sharing period operates in the Power save mode during the period. In this field, a set value "0" indicates that a communication apparatus that is not permitted to share a TXOP acquired by an AP and communicate is not allowed to change to the Power save mode during a TXOP sharing period. In the field, a set value "1" indicates that a communication apparatus that is not permitted to share a TXOP acquired by an AP and communicate is allowed to change to the Power save mode during a TXOP sharing period.

The above-described names of the fields and the subfields are examples. The fields and the subfields may have different names. Furthermore, the correspondence between the values and the states may differ from the above example as long as either of the values indicates change to the Power save mode. Although this embodiment describes the example in which the above-described fields are included in the Common Info field of the MU-RTS TXS Trigger frame, these fields may be included in a User Info field.

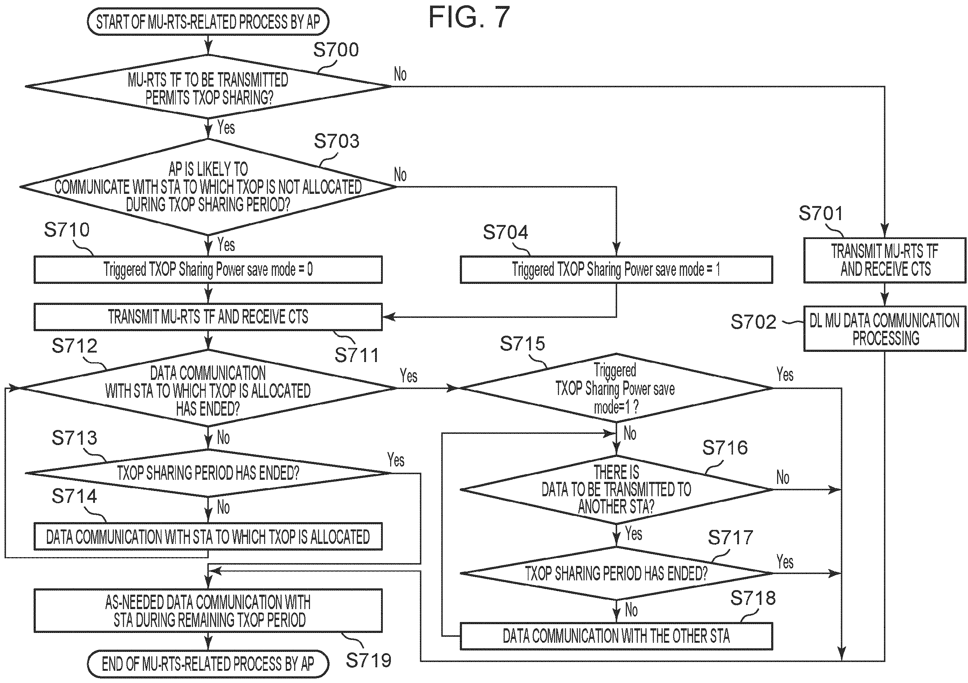

A process associated with TXOP sharing and implemented by executing the program stored in the storage unit 201 of the communication apparatus 101, serving as an AP, through the control unit 202 will be described with reference to Fig. 7. The embodiment describes the example in which an MU-RTS TXS Trigger frame includes subfields defined in Fig. 6. The process of the flowchart starts in response to the AP starting DL MU communication or Triggered TXOP sharing communication.

The AP determines whether an MU-RTS TXS Trigger frame to be transmitted permits execution of TXOP sharing communication (S700). In response to determining in S700 that the frame permits the execution of TXOP sharing communication, the AP proceeds to S703. Otherwise, the AP proceeds to S701.

In response to determining in S700 that the frame does not permit the execution of TXOP sharing communication, the AP transmits the MU-RTS TXS Trigger frame and receives a CTS frame from an STA with which the AP is to execute DL MU communication (S701). In response to receiving the CTS frame in S701, the AP executes DL MU data communication processing in S702.

In response to determining in S700 that the frame permits the execution of TXOP sharing communication, the AP determines whether the AP is likely to communicate with an STA to which a TXOP is not allocated during a TXOP sharing period (S703). A likelihood that the AP will communicate with an STA to which the TXOP is not allocated means that, for example, in a case where the TXOP sharing period ends earlier than expected, the AP can communicate with the STA to which the TXOP is not allocated.

In response to determining in S703 that the AP is likely to communicate with an STA to which the TXOP is not allocated during the TXOP sharing period, the AP sets 0 in the Triggered TXOP Sharing Power save mode field (S710). In other words, the value set in S710 indicates that the STA is not allowed to change to the Power save mode during the TXOP sharing period. The AP then transmits the MU-RTS TXS Trigger frame in which 0 is set in the Triggered TXOP Sharing Power save mode field (S711).

In response to determining in S703 that the AP is unlikely to communicate with an STA to which the TXOP is not allocated during the TXOP sharing period, the AP sets 1 in the Triggered TXOP Sharing Power save mode field (S704). In other words, the value set in S710 indicates that the STA is allowed to change to the Power save mode during the TXOP sharing period. The AP then transmits the MU-RTS TXS Trigger frame in which 1 is set in the Triggered TXOP Sharing Power save mode field (S711).

After acknowledging receipt of a CTS frame as a response frame to the MU-RTS TXS Trigger frame transmitted in S711, the AP determines whether data communication with the STA to which the TXOP is allocated has ended (S712). In response to determining in S712 that the data communication with the STA to which the TXOP is allocated has ended, the AP proceeds to S715. Otherwise, the AP proceeds to S713. For determination in S712, for example, if no data from the STA to which the TXOP is allocated has been received for a predetermined period, the AP determines that the data communication has ended.

In response to determining in S712 that the data communication with the STA to which the TXOP is allocated has ended, the AP determines whether the TXOP sharing period has ended (S713). In response to determining in S713 that the data communication with the STA to which the TXOP is allocated has ended, the AP communicates with another STA as needed during the remaining TXOP period. Otherwise, the AP executes data communication with the STA to which the TXOP is allocated in S714.

In response to determining in S713 that the data communication with the STA to which the TXOP is allocated has ended, the AP determines whether 1 is set in the Triggered TXOP Sharing Power save mode field (S715). If the AP determines in S715 that 1 is set in the field, or if the set value indicates that an STA is allowed to change to the Power save mode during the TXOP sharing period, the AP operates as follows. Specifically, if the AP determines that 1 is set in the field, and if there is data to be transmitted to an STA to which the TXOP is not allocated, the STA can change to the Power save mode. For this reason, the AP proceeds to S719 without transmitting data.

In response to determining in S715 that 0 is set in the field, or that the set value indicates that an STA is not allowed to change to the Power save mode during the TXOP sharing period, the AP determines whether there is data to be transmitted to another STA (S716). In response to determining in S716 that there is data to be transmitted to another STA, the AP proceeds to S717. In response to determining in S716 that there is no data to be transmitted to another STA, the AP proceeds to S719. The AP then terminates the process of the flowchart.

In response to determining in S716 that there is data to be transmitted to another STA, the AP determines whether the TXOP sharing period has ended (S717). In response to determining that the TXOP sharing period has not ended, the AP executes data communication with the other STA in S718.

In response to determining in S717 that the TXOP sharing period has ended, the AP proceeds to S719 and then terminates the process of the flowchart.

According to the embodiment, in a case where a Trigger frame indicates that an STA that is not permitted to communicate during a TXOP sharing period maintains the Awake state during this period, the STA can maintain the Awake state during the period.

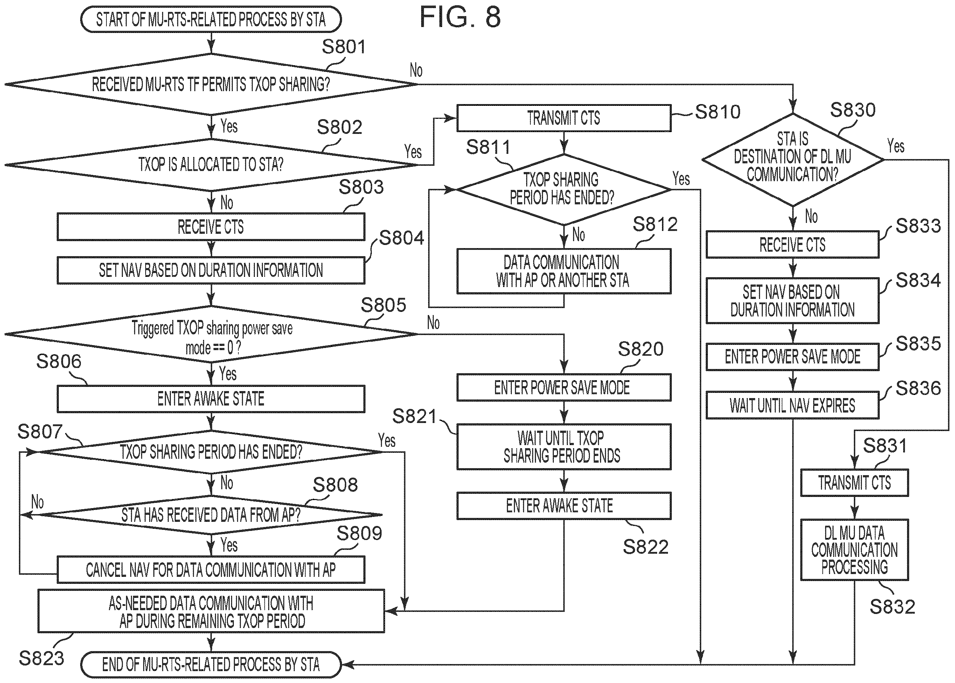

A process associated with TXOP sharing and implemented by executing the program stored in the storage unit 201 of the communication apparatus 102, the communication apparatus 103, or the communication apparatus 104, serving as an STA, through the control unit 202 will now be described with reference to Fig. 8. This process of the flowchart starts in response to the STA receiving a MU-RTS TXS Trigger frame.

The STA determines whether the MU-RTS TXS Trigger frame received from an AP permits execution of TXOP sharing communication (S801). In response to determining in S801 that the frame permits the execution of TXOP sharing communication, the STA proceeds to S802. Otherwise, the STA proceeds to S830. The execution of TXOP sharing communication can be permitted in a TXOP sharing mode subfield included in a Common Info field of the MU-RTS TXS Trigger frame.

In response to determining in S801 that the frame permits the execution of TXOP sharing communication, the STA determines whether a TXOP acquired by the AP is allocated to the STA (S802). In response to determining that the TXOP is allocated to the STA, the STA proceeds to S810. Otherwise, the STA proceeds to S803.

After determining in S802 that the TXOP acquired by the AP is not allocated to the STA, the STA receives a CTS frame from an STA to which the TXOP is allocated (S803). The STA then sets an NAV based on duration information included in the received MU-RTS TXS Trigger frame or CTS frame (S804).

The STA then determines whether 0 is set in a Triggered TXOP Sharing Power save mode field included in the MU-RTS TXS Trigger frame (S805). In response to determining that 0 is set in the field, the STA proceeds to S806 to enter the Awake state. In response to determining that 0 is not set in the field, the STA proceeds to S820 to change to the Power save mode.

After entering the Awake state in S806, the STA determines whether a TXOP sharing period has ended (S807). In response to determining that the period has ended, the STA proceeds to S823. Otherwise, the STA proceeds to S808.

In response to determining in S807 that the TXOP sharing period has not ended, the STA determines whether the STA has received a data frame from the AP during the TXOP sharing period (S808). In response to determining in S808 that the STA has received no data frame from the AP, the STA returns to S807. In response to determining that the STA has received a data frame from the AP, the STA cancels the set NAV and executes data communication with the AP (S809). In S823, the STA executes data communication with the AP in response to receiving data from the AP during a remaining TXOP period. Upon completion of the data communication with the AP, the STA terminates the process of the flowchart.

After the STA changes to the Power save mode in S820 in response to determining in S805 that the value in the field is not 0, the STA waits until the TXOP sharing period ends (S821). The STA then changes to the Awake state in S822. In S823, the STA executes data communication with the AP during the remaining TXOP period in response to receiving data from the AP.

If the TXOP is allocated to the STA, the STA transmits a CTS frame as a response to the AP in S810. The STA then determines whether the TXOP sharing period has ended (S811). In response to determining that the period has ended, the STA proceeds to S823. Otherwise, the STA proceeds to S812 to execute data communication with the AP or another STA within the acquired TXOP.

In response to receiving data from the AP during the remaining TXOP period in S823 after determining that the TXOP sharing period has ended, the STA executes data communication with the AP and then terminates the process of the flowchart.

If the received MU-RTS TXS Trigger frame does not designate TXOP sharing, the STA determines whether the STA is a destination of DL MU (down-link multi-user) communication (S830). In response to determining in S830 that the STA is a destination, the STA proceeds to S831. Otherwise, the STA proceeds to S833.

In response to determining in S830 that the STA is a destination of DL MU communication, the STA transmits a CTS frame, serving as a response frame to the MU-RTS TXS Trigger frame, to the AP (S831) and then executes DL MU data communication with the AP (S832).

After determining in S830 that the STA is not a destination of DL MU communication, the STA receives a CTS frame from an STA that is a destination of DL MU communication (S833). In S834, the STA sets an NAV based on duration information included in the MU-RTS TXS Trigger frame or the CTS frame.

The STA changes to the Power save mode in S835 because the STA receives no data during the DL MU communication. In S836, the STA waits until the NAV expires and then terminates the process of the flowchart.

According to this embodiment, in a case where a Trigger frame indicates that an STA that is not permitted to communicate during a TXOP sharing period maintains the Awake state during this period, the STA maintains the Awake state during the period. The STA that is not permitted to communicate within a TXOP maintains the Awake state during the TXOP sharing period and thus can receive a frame transmitted from an AP during the TXOP sharing period.

A storage medium storing program code of software that implements the above-described functions may be supplied to a system or an apparatus, and a computer (CPU or MPU) of the system or apparatus may read out and execute the program code stored in the storage medium. In this case, the program code itself read out from the storage medium implements the functions of the above-described embodiments. The storage medium storing the program code constitutes the above-described apparatus.

Usable examples of the storage medium for providing the program code include a flexible disk, a hard disk, an optical disk, a magneto-optical disk, a CD-ROM, a CD-R, a magnetic tape, a nonvolatile memory card, a ROM, and a DVD.

The above-described functions may be implemented not only by executing the read-out program code through the computer but also by causing an OS running on the computer to perform part or the whole of actual processing based on instructions of the program code. The term "OS" is an abbreviation for "operating system".

Furthermore, the program code read out from the storage medium may be written in a memory included in a function expansion board inserted in the computer or a function expansion unit connected to the computer. The above-described functions may be implemented by causing a CPU included in the function expansion board or the function expansion unit to perform part or the whole of actual processing based on the instructions of the program code.

The present invention can also be achieved by supplying a program that implements one or more functions of the above-described embodiments to a system or an apparatus via a network or a storage medium and causing one or more processors in a computer of the system or the apparatus to read out and execute the program. The present invention can also be achieved by a circuit (e.g., an ASIC) that implements one or more functions.

The present invention is not limited to the above-described embodiments. Various modifications and variations can be made without departing from the spirit and scope of the present invention. The following claims, therefore, are attached to make public the scope of the present invention.

This application claims priority based on Japanese Patent Application No. 2022-052636 filed March 28, 2022, which is hereby incorporated by reference herein in its entirety.

## Claims

1. A communication apparatus that joins a wireless network formed by a first other communication apparatus, the communication apparatus comprising:
first receiving means for receiving, while the communication apparatus is in an Awake state, a Trigger frame conforming to an IEEE 802.11 series standard from the other communication apparatus, the Trigger frame permitting to share a first period with at least one communication apparatus joining the wireless network and communicate, the first period being at least one portion of a TXOP (transmission opportunity) acquired by the first other communication apparatus; and
control means for, in a case where the communication apparatus is not permitted to share the first period by the Trigger frame received by the first receiving means, causing the communication apparatus to maintain the Awake state during the first period.

2. The communication apparatus according to Claim 1, further comprising:
second receiving means for receiving a response frame to the Trigger frame from a second other communication apparatus that is permitted to share the first period by the Trigger frame; and
setting means for, in a case where the communication apparatus is not permitted to share the first period by the Trigger frame received by the first receiving means, setting a second period during which the communication apparatus is inhibited from transmitting a frame, the setting being based on information included in the Trigger frame received by the first receiving means or the response frame received by the second receiving means.

3. The communication apparatus according to Claim 2, wherein the communication apparatus maintains the Awake state during the second period set by the setting means.

4. The communication apparatus according to Claim 2 or 3, wherein the second period is an NAV (network allocation vector).

5. The communication apparatus according to any one of Claims 1 to 4, wherein the Trigger frame includes information indicating whether to cause the communication apparatus to maintain the Awake state during the first period in a case where the communication apparatus is not permitted to share the first period by the Trigger frame received by the first receiving means.

6. A communication apparatus that operates to form a wireless network, the communication apparatus comprising:
transmitting means for transmitting a Trigger frame conforming to an IEEE 802.11 series standard to another communication apparatus joining a wireless network formed by the communication apparatus, the Trigger frame permitting to share a first period with at least one communication apparatus joining the wireless network and communicate, the first period being at least one portion of a TXOP (transmission opportunity) acquired by the communication apparatus,
wherein the Trigger frame includes information indicating whether to cause a communication apparatus that is not permitted to share the first period by the Trigger frame to maintain an Awake state during the first period.

7. The communication apparatus according to any one of Claims 1 to 5, wherein the Trigger frame is an MU-RTS TXS Trigger frame.

8. A communication method for a communication apparatus that joins a wireless network formed by a first other communication apparatus, the method comprising:
a first receiving step of receiving, at the communication apparatus in an Awake state, a Trigger frame conforming to an IEEE 802.11 series standard from the other communication apparatus, the Trigger frame permitting to share a first period with at least one communication apparatus joining the wireless network and communicate, the first period being at least one portion of a TXOP (transmission opportunity) acquired by the first other communication apparatus; and
a controlling step of, in a case where the communication apparatus is not permitted to share the first period by the Trigger frame received in the first receiving step, causing the communication apparatus to maintain the Awake state during the first period.

9. A communication method for a communication apparatus that operates to form a wireless network, the method comprising:
a transmitting step of transmitting a Trigger frame conforming to an IEEE 802.11 series standard to another communication apparatus joining a wireless network formed by the communication apparatus, the Trigger frame permitting to share a first period with at least one communication apparatus joining the wireless network and communicate, the first period being at least one portion of a TXOP (transmission opportunity) acquired by the communication apparatus,
wherein the Trigger frame includes information indicating whether to cause a communication apparatus that is not permitted to share the first period by the Trigger frame to maintain an Awake state.

10. A program that causes a computer to function as the means of the communication apparatus according to any one of Claims 1 to 5.
